(19) **Europäisches Patentamt / European Patent Office / Office européen des brevets**

(11) **EP 3 868 828 B1**

(12) # EUROPEAN PATENT SPECIFICATION

(45) Date of publication and mention of the grant of the patent:
**28.08.2024  Bulletin 2024/35**

(21) Application number: **19883993.8**

(22) Date of filing: **30.10.2019**

(51) International Patent Classification (IPC):
**C08L 69/00** $^{(2006.01)}$   **C08L 23/14** $^{(2006.01)}$
**C08L 23/12** $^{(2006.01)}$   **C08L 31/04** $^{(2006.01)}$
**C08L 33/02** $^{(2006.01)}$   **C08L 25/08** $^{(2006.01)}$
**C08L 53/02** $^{(2006.01)}$

(52) Cooperative Patent Classification (CPC):
(C-Sets available)
**C08L 69/00;** C08L 2205/03; C08L 2205/035 (Cont.)

(86) International application number:
**PCT/CN2019/114379**

(87) International publication number:
**WO 2020/098498 (22.05.2020 Gazette 2020/21)**

(54) **POLYPROPYLENE/POLYCARBONATE ALLOY HAVING HIGH WELD BOND STRENGTH AND PREPARATION METHOD THEREFOR**

POLYPROPYLEN-/POLYCARBONATLEGIERUNG MIT HOHER SCHWEISSNAHTFESTIGKEIT UND VERFAHREN ZU IHRER HERSTELLUNG

ALLIAGE POLYPROPYLÈNE-POLYCARBONATE AYANT UNE FORCE DE LIAISON PAR SOUDURE ÉLEVÉE ET SON PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **13.11.2018  CN 201811348964**

(43) Date of publication of application:
**25.08.2021  Bulletin 2021/34**

(73) Proprietor: **Kingfa Sci. & Tech. Co., Ltd.
Guangzhou, Guangdong 510663 (CN)**

(72) Inventors:
• **YANG, Yan**
  **Guangzhou, Guangdong 510663 (CN)**
• **LI, Mingkun**
  **Guangzhou, Guangdong 510663 (CN)**
• **HUANG, Xianbo**
  **Guangzhou, Guangdong 510663 (CN)**
• **YE, Nanbiao**
  **Guangzhou, Guangdong 510663 (CN)**
• **TONG, Wei**
  **Guangzhou, Guangdong 510663 (CN)**

• **DONG, Xiangmao**
  **Guangzhou, Guangdong 510663 (CN)**
• **AI, Junwei**
  **Guangzhou, Guangdong 510663 (CN)**

(74) Representative: **dompatent von Kreisler Selting Werner -
Partnerschaft von Patent- und Rechtsanwälten mbB
Deichmannhaus am Dom
Bahnhofsvorplatz 1
50667 Köln (DE)**

(56) References cited:
| | |
|---|---|
| EP-A1- 0 119 533 | WO-A1-2013/007760 |
| CN-A- 104 140 661 | CN-A- 104 788 926 |
| CN-A- 105 814 138 | CN-A- 106 243 672 |
| CN-A- 106 867 113 | CN-A- 106 916 371 |
| CN-A- 107 250 269 | CN-A- 108 727 799 |
| CN-A- 109 504 058 | US-A- 4 587 295 |
| US-A- 4 806 597 | US-A1- 2015 010 755 |
| US-A1- 2018 022 909 | US-A1- 2018 223 098 |

**(Cont. next page)**

(52) Cooperative Patent Classification (CPC): (Cont.)

C-Sets
**C08L 69/00, C08L 23/0869, C08L 23/0884,
C08L 23/12;
C08L 69/00, C08L 23/0869, C08L 23/12;
C08L 69/00, C08L 23/12, C08L 53/02**

**Description**

**TECHNICAL FIELD**

The present invention relates to the technical field of polymer materials, and more particularly, relates to a high weld line strength polypropylene/polycarbonate alloy and a preparation method thereof.

**BACKGROUND**

Polycarbonate (PC) is an engineering plastic with excellent performances, having an excellent mechanical property and an excellent dimensional stability, and a thermal stability, a weather resistance, a creep resistance, and a heat resistance are good. However, due to the presence of a rigid group in the PC molecular chain, a melt viscosity thereof is high, and in addition, its product has a poor chemical resistance.

By blending a polypropylene with the polycarbonate, flowability of the polycarbonate can be improved, and thus processability can be improved, and a material having good processability and an excellent chemical resistance can be obtained. However, due to its poor compatibility, low weld line strength, and insufficient chemical resistance, the alloy becomes a weak point, which can easily lead to fracture failure of a part. US 4 587 295 A addresses the problem of incompatibility of polycarbonate blends and the consequences like surface delamination, poor weld line strength, stress cracking and solvent resistance. Example 1 discloses a composition comprising 47,5 pbw of a bisphenol A-based polycarbonate, 37,5 pbw of polypropylene and 15 pbw of an ethylene vinyl alcohol copolymer.

**SUMMARY**

An objective of the present invention is to overcome the above technical defects, and to provide a high weld line strength polypropylene/polycarbonate alloy, having an excellent chemical resistance.

Another objective of the present invention is to provide a preparation method of the above-mentioned polypropylene/polycarbonate alloy.

The present invention is realized by the following technical solution.

A high weld line strength polypropylene/polycarbonate alloy includes the following components in parts by weight:

| | |
|---|---|
| a polypropylene | 5 parts to 40 parts; |
| a polycarbonate | 40 parts to 85 parts; and |
| an ethylene copolymer compatibilizer | 1 part to 15 parts. |

The polypropylene is preferably selected from at least one of a copolymerized polypropylene and a homopolymerized polypropylene.

The ethylene copolymer compatibilizer is selected from an ethylene copolymer of acrylic acid,. The ethylene copolymer of acrylic acid is selected from at least one of an ethylene-methacrylic acid copolymer, an ethylene-ethyl acrylate copolymer, and an ethylene-butyl acrylate copolymer. Preferably, the ethylene copolymer compatibilizer is selected from the ethylene copolymer of acrylic acid.

The ethylene copolymer compatibilizer is selected from an ethylene copolymer compatibilizer containing a reactive active group, wherein the ethylene copolymer is selected from at least one of an ethylene copolymer of acrylic acid. The reactive active group is at least one of a maleic anhydride group and an epoxy group, and a grafting ratio of the reactive active group is 0.1% to 15%. The ethylene copolymer of acrylic acid is selected from at least one of an ethylene-methacrylic acid copolymer, an ethylene-ethyl acrylate copolymer, and an ethylene-butyl acrylate copolymer. The ethylene copolymer is selected from the ethylene copolymer of acrylic acid.

The polycarbonate is selected from an aromatic polycarbonate, an aliphatic polycarbonate, and an aromatic-aliphatic polycarbonate. Preferably, the polycarbonate has a weight average molecular weight of 18,000 to 28,000.

In parts by weight, 0 part to 10 parts of a processing aid and/or an additive are further included.

Further, by selecting the polypropylene and the ethylene copolymer compatibilizer, weld line strength of the present invention is further improved.

After melt mixing the polycarbonate and the polypropylene into an alloy, a phase structure with the polypropylene as a dispersed phase and the polycarbonate as a continuous phase is formed. The weld line strength is determined jointly by a particle size and an orientation of the dispersed phase at a weld line as well as a surface tension between the polycarbonate and the polypropylene. The smaller the particle size of the dispersed phase, the smaller the orientation, and the smaller the surface tension, the higher the weld line strength is. The particle size can be known from a formula that, when a melt index of the dispersed phase is large, $E_{DK}$ is small, which is easier to reduce the particle size of the dispersed phase; however, according to a diffusion theory of a polymer, the large melt index of the dispersed phase will lead to an increase of the orientation, and therefore, a selection of the melt index of the dispersed phase needs to selected to balance the particle size and the orientation, and only when the particle size is reduced to a maximum extent while maintaining the relatively small orientation, the high weld line strength can be obtained.

$$d \cong \frac{24 P_r \gamma}{\pi \sigma_{12}} \left( \varphi + \frac{4 P_r E_{DK}}{\pi \sigma_{12}} \varphi^2 \right)$$

$\varphi$: a volume fraction of the dispersed phase; $P_r$: a probability of collision; $\gamma$: an interfacial bonding force; $\sigma_{12}$: a shear stress.

Futhermore, a general ethylene copolymer compatibilizer is a B-D type graft copolymer, wherein a B chain segment of an ethylene molecular chain segment is similar in structure to the polypropylene, and has an excellent compatibility with the polypropylene due to the similar compatibility; in addition, there is a chemical reaction between a D chain segment and an end group of the polycarbonate, and the D segment chain is combined with the polycarbonate through a chemical bond, so that a compatibility with the polycarbonate is correspondingly improved, that is to say, the compatibilizer is used as a bridging substance to connect the polypropylene and the polycarbonate, thereby improving a compatibility between the polypropylene and the polycarbonate, and thus reducing the surface tension. Therefore, after the ethylene copolymer compatibilizer is added to an alloy of a polypropylene resin and a polycarbonate resin, the particle size of the dispersed phase is thereby indirectly reduced. However, due to an increase in the compatibility, an interaction force between molecular chains is also increased, thereby reducing a melt index of the alloy system.

A melt index of the ethylene copolymer compatibilizer affects a degree and a rate of diffusion. When the melt index is too low, the ethylene copolymer compatibilizer diffuses slowly in a molten state, so that it cannot play a role of increasing the compatibility. When the melt index reaches a certain level, the ethylene copolymer compatibilizer easily diffuses to an interface between the dispersed phase and the continuous phase, and connects the dispersed phase and the continuous phase of the alloy, thereby increasing the interfacial bonding force, and through a stress transfer, reducing the particle size of the dispersed phase and improving the weld line strength of the alloy. However, when the melt index of the ethylene copolymer compatibilizer is too high, a degree of interpenetration of the ethylene copolymer compatibilizer between the dispersed phase and the continuous phase is instead reduced, and the weld line strength is instead reduced.

A number and a type of an active group of the ethylene copolymer compatibilizer affect reactivity with the polycarbonate, and the reactive active group increases a degree of reaction with the polycarbonate, and thus the weld line strength is improved and the melt index of the alloy is decreased due to an increase in a steric hindrance and an intermolecular force.

In summary, according to the present invention, by increasing the melt index of the polypropylene within a melt index range of 40g/10min to 150g/10min under a test condition of 230°C, 2. 16kg, the particle size is reduced to a maximum extent while maintaining the relatively small orientation, and an ethylene copolymer compatibilizer is selected to indirectly reduce the particle size of the dispersed phase. Such, in the polypropylene/polycarbonate alloy of the present invention, the particle size of the dispersed phase is small and the orientation is also small, and as a result, the weld line strength of the polycarbonate alloy is improved.

An ethylene copolymer of acrylic acid has a good solvent resistance and is resistant to most chemicals. Furthermore, due to its relatively high melt strength and similar compatibility of its polar group with the polycarbonate, weld line strength of a polycarbonate alloy thus can be significantly improved.

The high weld line strength polypropylene/polycarbonate alloy of the present invention has weld line strength of 60% or more and a melt index of 10g/10min or more, and a weld line strength test is according to ASTM D638 standard test, where a test condition of the melt index is 260°C, 2.16kg. More preferably, the high weld line strength polypropylene/polycarbonate alloy has the weld line strength of 65% or more and the melt index of 10g/10min or more, and the weld line strength test is according to the ASTM D638 standard test, where the test condition of the melt index is 260°C, 2.16kg.

A preparation method of the high weld line strength polypropylene/polycarbonate alloy includes the following steps: mixing the polycarbonate, the polypropylene, the ethylene copolymer compatibilizer, and the processing aid and/or the additive evenly according to a ratio in a high-speed mixer; then adding into a twin-screw extruder, melt mixing at a temperature of 220°C to 240°C, and then granulating, cooling and drying to obtain a high weld line strength polycarbonate alloy.

In order to obtain the high weld line strength polypropylene/polycarbonate alloy having the weld line strength of 60% or more and the melt index of 10g/10min or more, the polypropylene has the melt index of greater than 40g/10min to 150g/10min under the test condition of 230°C, 2.16kg. Preferably, the polypropylene has the melt index of greater than 60g/10min to 150g/10min under the test condition of 230°C, 2.16kg.

The ethylene copolymer compatibilizer has a melt index of 0.2g/10min to 50g/10min under a test condition of 190°C, 2.16kg. Preferably, the ethylene copolymer compatibilizer has the melt index of greater than or equal to 0.4g/10min to 35g/10min under the test condition of 190°C, 2.16kg.

The present invention has the following beneficial effects.

According to the present invention, by adding the ethylene copolymer compatibilizer to a polypropylene/polycarbonate alloy, weld line strength and chemical resistance of the alloy are improved. Further, the present invention discovers that the ethylene copolymer of acrylic acid greatly improves the weld line strength and chemical resistance strength of the alloy. Further more, the present invention optimizes the melt indexes of the polypropylene and the ethylene copolymer compatibilizer, and the weld line strength of the resulting alloy is further improved. The present invention also discovers that a weight average molecular weight of the polycarbonate also affects the weld line strength and the chemical resistance of the alloy, that is when the weight average molecular weight of the polycarbonate is 18,000 to 28,000, the alloy has better weld line strength and chemical resistance. In summary, the high weld line strength polypropylene/polycarbonate alloy of the present invention has the advantages of high weld line strength, an excellent chemical resistance, and the like.

## DETAILED DESCRIPTION

The present invention will be further illustrated below by specific implementations, the following embodiments are preferred implementations of the invention, but the implementations of the present invention are not limited by the following embodiments.

Raw materials of Embodiments and Comparative Examples are commercially available, specifically:

polypropylene: copolymerized polypropylene;
EMA: ethylene-methacrylic acid copolymer;
EEA: ethylene-ethyl acrylate copolymer;
EMA-g-GMA: ethylene-methacrylic acid graft epoxy group (GMA is an epoxy group);
EVA: ethylene-vinyl acetate copolymer;
SEBS: styrene-ethylene-butadiene-styrene copolymer;
compatibilizer B: PP-G-MAH (polypropylene graft maleic anhydride);
polycarbonate A: an aromatic polycarbonate with a weight average molecular weight being 28,000;
polycarbonate B: an aliphatic polycarbonate with a weight average molecular weight being 18,000;
polycarbonate C: an aromatic polycarbonate with a weight average molecular weight being 8,000;
polycarbonate D: an aromatic polycarbonate with a weight average molecular weight being 30,000;
anti-aging agent: anti-oxidant: anti-ultraviolet aging agent =1:1.

A preparation method of a polycarbonate alloy in Embodiments and Comparative Examples:
A preparation method of a polypropylene/polycarbonate alloy in Embodiments and Comparative Examples: a polycarbonate, a polypropylene, a compatibilizer, and a processing aid and/or an additive were mixed evenly according to a ratio in a high-speed mixer; then added into a twin-screw extruder, melt mixed at a temperature of 220°C to 240°C, and then granulated, cooled and dried to obtain a high weld line strength polycarbonate alloy.

Each test method:

(1) Alloy Melt Index (MFR): according to a test ASTM D1238, a test condition of the polycarbonate alloy is 260°C, 2.16kg;
(2) Chemical resistance: a sample is immersed in various chemicals (methanol, 10% sulfuric acid, thinning solvent, acetone, soybean oil, and ink) for 7 days and visually observed to evaluate the chemical resistance. There are four grades: completely no changes in appearance marked as excellent, a slight swelling marked as good, a micro number of cracks marked as medium, and a large number of cracks or fractures marked as poor.
(3) Weld line strength: characterized by a weld line coefficient $F_{KL}$:

$$F_{KL} = TS_X / TS_0 \times 100\%$$

$TS_X$ is tensile strength of weld line and $TS_0$ is tensile strength without the weld line, and an ASTM D638 standard test is applied.

Table 1: Ingredients and ratios (in parts by weight) and each performance test results of Embodiments 1 to 10

| | | Embodiment 1 | Embodiment 2 | Embodiment 3 | Embodiment 4 | Embodiment 5 |
|---|---|---|---|---|---|---|
| Polypropylene | MFR, g/10min | 40 | 40 | 40 | 40 | 40 |
| | Amount, parts | 15 | 15 | 15 | 15 | 15 |
| Polycarbonate A, parts | | 80 | 80 | 80 | 80 | 80 |
| Compatibilizer A | Species of reactive active group | - | - | - | - | - |
| | Grafting rate of reactive active group, % | - | - | - | - | - |
| | Ethylene copolymer | EMA | EMA | EMA | EMA | EMA |
| | MFR, g/10min | 0.2 | 0.4 | 5 | 10 | 15 |
| | Amount, parts | 5 | 5 | 5 | 5 | 5 |
| Anti-aging agent | | 0.5 | 0.5 | 0.5 | 0.5 | 0.5 |
| MFR, g/10min | | 12 | 13 | 16 | 23 | 27 |
| Weld line strength, % | | 65 | 70 | 75 | 80 | 85 |
| Chemical resistance | | excellent | excellent | excellent | excellent | excellent |

Continued to Table 1:

| | | Embodiment 6 | Embodiment 7 | Embodiment 8 | Embodiment 9 | Embodiment 10 |
|---|---|---|---|---|---|---|
| Polypropylene | MFR, g/10min | 40 | 40 | 60 | 80 | 100 |
| | Amount, parts | 15 | 15 | 15 | 15 | 15 |
| Polycarbonate A, parts | | 80 | 80 | 80 | 80 | 80 |
| Compatibilizer A | Species of reactive active group | - | - | - | - | - |
| | Grafting rate of reactive active group, % | - | - | - | - | - |
| | Ethylene copolymer | EMA | EMA | EMA | EMA | EMA |
| | MFR, g/10min | 35 | 50 | 5 | 5 | 5 |
| | Amount, parts | 5 | 5 | 5 | 5 | 5 |
| Anti-aging agent | | 0.5 | 0.5 | 0.5 | 0.5 | 0.5 |
| MFR, g/10min | | 30 | 36 | 18 | 22 | 25 |

(continued)

| | Embodiment 6 | Embodiment 7 | Embodiment 8 | Embodiment 9 | Embodiment 10 |
|---|---|---|---|---|---|
| Weld line strength, % | 81 | 68 | 80 | 83 | 85 |
| Chemical resistance | excellent | excellent | excellent | excellent | excellent |

Table 2: Ingredients and ratios (in parts by weight) and each performance test results of Embodiments 11 to 20

| | | Embodiment 11 | Embodiment 12 | Reference Embodiment 13 | Reference Embodiment 14 | Embodiment 15 |
|---|---|---|---|---|---|---|
| Polypropylene | MFR, g/10min | 150 | 40 | 40 | 40 | 100 |
| | Amount, parts | 15 | 15 | 15 | 15 | 15 |
| Polycarbonate A, parts | | 80 | 80 | 80 | 80 | 80 |
| Polycarbonate B, parts | | - | - | | | - |
| Polycarbonate C, parts | | - | - | | | - |
| Polycarbonate D, parts | | - | - | | | - |
| Compatibilizer A | Species of reactive active group | - | - | | | GMA |
| | Grafting rate of reactive active group, % | - | - | | | 0.1 |
| | Ethylene copolymer | EMA | EEA | EVA | SEBS | EMA |
| | MFR, g/10min | 5 | 0.2 | 0.2 | 0.2 | 5 |
| | Amount, parts | 5 | 5 | 5 | 5 | 5 |
| Anti-aging agent | | 0.5 | 0.5 | 0.5 | 0.5 | 0.5 |
| MFR, g/10min | | 38 | 13 | 11 | 12 | 22 |
| Weld line strength, % | | 89 | 66 | 61 | 60 | 87 |
| Chemical resistance | | excellent | excellent | excellent | excellent | excellent |

Continued to Table 2:

| | | Embodiment 16 | Embodiment 17 | Embodiment 18 | Embodiment 19 | Embodiment 20 |
|---|---|---|---|---|---|---|
| Polypropylene | MFR, g/10min | 100 | 100 | 100 | 100 | 100 |
| | Amount, parts | 15 | 15 | 15 | 15 | 15 |
| Polycarbonate A, parts | | 80 | 80 | - | - | - |
| Polycarbonate B, parts | | - | - | 80 | - | - |
| Polycarbonate C, parts | | - | - | - | 80 | - |
| Polycarbonate D, parts | | - | - | - | - | 80 |

(continued)

| | | Embodiment 16 | Embodiment 17 | Embodiment 18 | Embodiment 19 | Embodiment 20 |
|---|---|---|---|---|---|---|
| Compatibilizer A | Species of reactive active group | GMA | GMA | - | - | - |
| | Grafting rate of reactive active group, % | 5 | 15 | - | - | - |
| | Ethylene copolymer | EMA | EMA | EMA | EMA | EMA |
| | MFR, g/10min | 5 | 5 | 5 | 5 | 5 |
| | Amount, parts | 5 | 5 | 5 | 5 | 5 |
| Anti-aging agent | | 0.5 | 0.5 | 0.5 | 0.5 | 0.5 |
| MFR, g/10min | | 18 | 14 | 31 | 34 | 21 |
| Weld line strength, % | | 89 | 91 | 85 | 74 | 65 |
| Chemical resistance | | excellent | excellent | excellent | excellent | excellent |

Table 3: Ingredients and ratios (in parts by weight) and each performance test results of Embodiments 21 to 22 and Comparative Examples

| | | Embodiment 21 | Embodiment 22 | Comparative Example 1 | Comparative Example 2 | Comparative Example 3 | Comparative Example 4 |
|---|---|---|---|---|---|---|---|
| Polypropylene | MFR, g/10min | 100 | 100 | 100 | 100 | 30 | 40 |
| | Amount, parts | 15 | 15 | 15 | 15 | 15 | 15 |
| Polycarbonate A, parts | | | 80 | 80 | 80 | 80 | 80 |
| Compatibilizer A | Species of reactive active group | - | - | - | - | - | - |
| | Grafting rate of reactive active group, % | - | - | - | - | - | - |
| | Ethylene copolym er | EMA | EMA | - | - | EMA | EMA |
| | MFR, g/10min | 5 | 5 | - | - | 5 | 60 |
| | Amount, parts | 1 | 15 | - | - | 5 | 5 |
| Amount of compatibilizer B, parts | | - | - | - | 5 | - | - |

(continued)

|  |  | Embodiment 21 | Embodiment 22 | Comparative Example 1 | Comparative Example 2 | Comparative Example 3 | Comparative Example 4 |
|---|---|---|---|---|---|---|---|
| Anti-aging agent | | 0.5 | 0.5 | 0.5 | 0.5 | 0.5 | 0.5 |
| MFR, g/10min | | 12 | 28 | 20 | 30 | 11 | 40 |
| Weld line strength, % | | 77 | 89 | 10 | 25 | 53 | 57 |
| Chemical resistance | | excellent | excellent | poor | good | good | good |

It can be seen from Embodiments 1 to 7 and Comparative Example 4 that as an increase of the melt index of the ethylene copolymer compatibilizer, the melt index of the product increases and the weld line strength is in an inverted U-shape; when the melt index of the ethylene copolymer compatibilizer is 0.4g/10min to 35g/10min (under a test condition of 190°C, 2.16kg), the weld line strength of the product is relatively high; when the melt index of the ethylene copolymer compatibilizer is 60g/10min (under the test condition of 190°C, 2.16kg), the weld line strength and the chemical resistance of the product are greatly reduced.

It can be seen from Embodiments 3, 8 to 11 that as an increase of the melt index of the polyolefin, the weld line strength and the melt index of the product are increased.

It can be seen from Embodiment 10 and Embodiments 15 to 17 that the ethylene copolymer compatibilizer containing reactive active groups is more capable of increasing the weld line strength compared with the ethylene copolymer compatibilizer containing no reactive active groups.

It can be seen from Embodiments 1 and 12 that when the ethylene copolymer of acrylic acid is as a compatibilizer, each performance of the product is relatively good.

It can be seen from Embodiment 3 and Comparative Example 3 that when the melt index of the polyolefin is 30g/10min (under the test condition of 230°C, 2.16kg), the weld line strength of the product is considerably decreased and the melt index is relatively low.

It can be seen from Embodiments 10, 18 to 20 that the product prepared by a polycarbonate with a weight average molecular weight being 18,000 to 28,000 has relatively high weld line strength.

## Claims

1. A high weld line strength polypropylene/polycarbonate alloy, comprising the following components in parts by weight:

| a polypropylene | 5 parts to 40 parts; |
|---|---|
| a polycarbonate | 40 parts to 85 parts; and |
| an ethylene copolymer compatibilizer | 1 part to 15 parts, |

**characterized in that**,

the ethylene copolymer compatibilizer is selected from an ethylene copolymer of acrylic acid containing a reactive active group, the reactive active group is at least one of a maleic anhydride group and an epoxy group, and a grafting ratio of the reactive active group is 0.1% to 15% and the ethylene copolymer of acrylic acid is selected from at least one of an ethylene-methacrylic acid copolymer, an ethylene-ethyl acrylate copolymer, and an ethylene-butyl acrylate copolymer, and

the polycarbonate is selected from an aromatic polycarbonate, a aliphatic polycarbonate and an aromatic-aliphatic polycarbonate.

2. The high weld line strength polypropylene/polycarbonate alloy according to claim 1, wherein the polypropylene is selected from at least one of a copolymerized polypropylene and a homopolymerized polypropylene.

3. The high weld line strength polycarbonate alloy according to claim 1, wherein in parts by weight, 0 part to 10 parts of a processing aid and/or an additive are further comprised.

**4.** The high weld line strength polycarbonate alloy according to any one of claims 1 to 3, wherein the high weld line strength polycarbonate alloy has weld line strength of 60% or more, and a weld line strength test is according to ASTM D638 standard test; and preferably, the high weld line strength polycarbonate alloy has the weld line strength of 65% or more, and the weld line strength test is according to ASTM D638 standard test.

**5.** A preparation method of the high weld line strength polycarbonate alloy of claim 3, comprising the following steps: mixing the polycarbonate, polyolefin, the ethylene copolymer compatibilizer, and a processing aid and/or an additive evenly according to a ratio in a high-speed mixer; then adding into a twin-screw extruder, melt mixing at a temperature of 220°C to 240°C, and then granulating, cooling and drying to obtain the high weld line strength polycarbonate alloy.

**6.** The preparation method of the high weld line strength polycarbonate alloy according to claim 5, wherein the polypropylene has a melt index of greater than 40g/10min to 150g/10min under a test condition of 230°C, 2.16kg; preferably, the polypropylene has the melt index of greater than 60g/10min to 150g/10min under the test condition of 230°C, 2.16kg; and the ethylene copolymer compatibilizer has a melt index of 0.2g/10min to 50g/10min under a test condition of 190°C, 2.16kg; and preferably, the ethylene copolymer compatibilizer has the melt index of greater than or equal to 0.4g/10min to 35g/10min under the test condition of 190°C, 2.16kg.

## Patentansprüche

**1.** Polypropylen/Polycarbonat-Legierung mit hoher Schweißnahtfestigkeit, umfassend die folgenden Komponenten in Gewichtsteilen:

| | |
|---|---|
| ein Polypropylen | 5 Teile bis 40 Teile; |
| ein Polycarbonat | 40 Teile bis 85 Teile; und |
| ein Ethylen-Copolymer-Kompatibilisierungsmittel; | 1 Teil bis 15 Teile; |

**dadurch gekennzeichnet, dass**

das Ethylen-Copolymer-Kompatibilisierungsmittel aus einem Ethylen-Copolymer von Acrylsäure, das eine reaktive aktive Gruppe enthält, ausgewählt ist, die reaktive aktive Gruppe zumindest eine Maleinsäureanhydrid-Gruppe und/oder eine Epoxidgruppe ist und das Pfropfverhältnis der reaktiven aktiven Gruppe 0,1% bis 15% beträgt und das Ethylen-Copolymer von Acrylsäure aus wenigstens einem aus einem Ethylen-Methacrylsäure-Copolymer, einem Ethylen-Ethylacrylat-Copolymer und einem Ethylen-Butylacrylat-Copolymer ausgewählt ist und

das Polycarbonat aus einem aromatischen Polycarbonat, einem aliphatischen Polycarbonat und einem aromatisch-aliphatischen Polycarbonat ausgewählt ist.

**2.** Polypropylen/Polycarbonat-Legierung mit hoher Schweißnahtfestigkeit gemäß Anspruch 1, wobei das Polypropylen aus wenigstens einem aus einem copolymerisierten Polypropylen und einem homopolymerisierten Polypropylen ausgewählt ist.

**3.** Polycarbonat-Legierung mit hoher Schweißnahtfestigkeit gemäß Anspruch 1, wobei 0 Teile bis 10 Teile eines Verarbeitungshilfsmittels und/oder eines Additivs in Gewichtsteilen weiterhin enthalten sind.

**4.** Polycarbonat-Legierung mit hoher Schweißnahtfestigkeit gemäß einem der Ansprüche 1 bis 3, wobei die Polycarbonat-Legierung mit der hohen Schweißnahtfestigkeit eine Schweißnahtfestigkeit von 60% oder mehr aufweist und der Schweißnahtfestigkeitstest gemäß dem Standardtest ASTM D638 durchgeführt wird; und vorzugsweise die Polycarbonat-Legierung mit der hohen Schweißnahtfestigkeit eine Schweißnahtfestigkeit von 65% oder mehr aufweist und der Schweißnahtfestigkeitstest gemäß dem Standardtest ASTM D638 durchgeführt wird.

**5.** Herstellungsverfahren für die Polycarbonat-Legierung mit hoher Schweißnahtfestigkeit gemäß Anspruch 3, umfassend die folgenden Schritte: gleichmäßiges Mischen des Polycarbonats, Polyolefins, des Ethylen-Copolymer-Kompatibilisierungsmittels und eines Verarbeitungshilfsmittels und/oder eines Additivs gemäß einem Verhältnis in einem Hochgeschwindigkeitsmischer; dann Einfüllen in einen Doppelschneckenextruder, Schmelzmischen bei einer Temperatur von 220°C bis 240°C und dann Granulieren, Abkühlen und Trocknen, wobei man die Polycarbonat-Legierung mit hoher Schweißnahtfestigkeit erhält.

**6.** Herstellungsverfahren für die Polycarbonat-Legierung mit hoher Schweißnahtfestigkeit gemäß Anspruch 5, wobei das Polypropylen einen Schmelzindex von mehr als 40 g/10 min bis 150 g/10 min unter Testbedingungen von 230°C und 2,16 kg aufweist; vorzugsweise das Polypropylen einen Schmelzindex von mehr als 60 g/10 min bis 150 g/10 min unter Testbedingungen von 230°C und 2,16 kg aufweist; und das Ethylen-Copolymer-Kompatibilisierungsmittel einen Schmelzindex von 0,2 g/10 min bis 50 g/10 min unter Testbedingungen von 190°C und 2,16 kg aufweist; und vorzugsweise das Ethylen-Copolymer-Kompatibilisierungsmittel einen Schmelzindex von größer oder gleich 0,4 g/10 min bis 35 g/10 min unter Testbedingungen von 190°C und 2,16 kg aufweist.

**Revendications**

**1.** Alliage polypropylène/polycarbonate à grande résistance du joint de soudure, comprenant les composants suivants en parties en poids :

| | |
|---|---|
| un polypropylène | 5 parties à 40 parties, |
| un polycarbonate | 40 parties à 85 parties, et |
| un agent compatibilisant de copolymère d'éthylène, | 1 partie à 15 parties, |

**caractérisé en ce que**

ledit agent compatibilisant de copolymère d'éthylène est choisi parmi un copolymère d'éthylène et de l'acide acrylique contenant un groupe actif réactif, ledit groupe actif réactif étant au moins l'un parmi un groupe anhydride maléique et un groupe époxy, et le taux de greffage du groupe actif réactif est de 0,1 % à 15 %, et ledit copolymère d'éthylène et de l'acide acrylique est choisi parmi un copolymère d'éthylène/acide méthacrylique, un copolymère d'éthylène/acrylate d'éthyle, et/ou un copolymère d'éthylène/acrylate de butyle, et
ledit polycarbonate est choisi parmi un polycarbonate aromatique, un polycarbonate aliphatique, et un polycarbonate aromatique-aliphatique.

**2.** Alliage polypropylène/polycarbonate à grande résistance du joint de soudure selon la revendication 1, dans lequel ledit polypropylène est choisi parmi un polypropylène copolymérisé et/ou un polypropylène homo-polymérisé.

**3.** Alliage de polycarbonate à grande résistance du joint de soudure selon la revendication 1, dans lequel 0 partie à 10 parties d'un auxiliaire technologique et/ou d'un additif sont comprises en outre, en parties en poids.

**4.** Alliage de polycarbonate à grande résistance du joint de soudure selon l'une quelconque des revendications 1 à 3, dans lequel ledit alliage de polycarbonate à grande résistance du joint de soudure présente une résistance du joint de 60 % ou plus, et le test de résistance du joint de soudure est selon le test standard ASTM D638, et de préférence, ledit alliage de polycarbonate à grande résistance du joint de soudure présente une résistance du joint de 65 % ou plus, et le test de résistance du joint de soudure est selon le test standard ASTM D638,

**5.** Procédé de fabrication dudit alliage de polycarbonate à grande résistance du joint de soudure selon la revendication 3, comprenant les étapes suivantes consistant à : mélanger lesdits polycarbonate, polyoléfine, agent compatibilisant de copolymère d'éthylène, et un auxiliaire de fabrication, et/ou un additif uniformément selon un rapport dans un mélangeur à vitesse élevée, ensuite charger le mélange dans une extrudeuse à double vis, mélanger en état fondu à une température de 220°C à 240°C, et ensuite granuler, refroidir et sécher pour obtenir ledit alliage de polycarbonate à grande résistance du joint de soudure.

**6.** Procédé de fabrication dudit alliage de polycarbonate à grande résistance du joint de soudure selon la revendication 5, dans lequel ledit polypropylène présente un indice de fusion de plus de 40 g/10 min à 150 g/ 10 min sous des conditions de test de 230°C, 2,16 kg, de préférence, ledit polypropylène présente un indice de fusion de plus de 60 g/10 min à 150 g/10 min sous des conditions de test de 230°C, 2,16 kg, et ledit agent compatibilisant de copolymère d'éthylène présente un indice de fusion de 0,2 g/10 min à 50 g/10 min sous des conditions de test de 190°C, 2,16 kg, et de préférence, ledit agent compatibilisant de copolymère d'éthylène présente un indice de fusion supérieur ou égal à 0,4 g/ 10 min à 35 g/10 min sous des conditions de test de 190°C, 2,16 kg.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4587295 A